# EUROPEAN PATENT SPECIFICATION

(11) **EP 0 575 875 B1**
(45) Date of publication and mention of the grant of the patent: **09.08.2000**
(21) Application number: 93109585.5
(22) Date of filing: 16.06.1993
(51) Int. Cl.: C08F 4/642, C08F 10/00

(54) **Catalysts for the polymerization of olefins**
Katalysator zur Olefinpolymerisation
Catalyseurs pour la polymérisation d'oléfines

(30) Priority: 18.06.1992 IT MI921498; 18.06.1992 IT MI921497; 24.09.1992 IT MI922179
(43) Date of publication of application: 29.12.1993
(73) Proprietor: Montell Technology Company bv, 2132 MS Hoofddorp (NL)
(72) Inventor: Resconi, Luigi, I-44100 Ferrara (IT); Galimberti, Maurizio, I-20137 Milano (IT); Piemontesi, Fabrizio, I-13011 Borgosesia (VC) (IT); Guglielmi, Floriano, I-44100 Ferrara (IT); Albizzati, Enrico, I-28041 Arona (NO) (IT)
(74) Representative: Zanoli, Enrico

(56) References cited:
- EP-A- 0 308 177
- EP-A- 0 324 856
- EP-A- 0 328 348
- EP-A- 0 363 029
- EP-A- 0 520 816
- US-A- 5 087 788

## Description

The present invention relates to catalysts for the polymerization of olefins obtained from cyclopentadienyl compounds, organometallic aluminium compounds and water.

Homogeneous catalytic systems for the polymerization of olefins, prepared by contacting a metallocene, an aluminium alkyl and water are known.

Published International patent application WO 89/02448, for instance, describes a method for preparing a metallocene-aluminoxane catalyst in situ during the polymerization. On a metallocene-aluminium alkyl catalyst, the monomer to be polymerized containing 100-10,000 ppm of water is fed. The molar ratio alkyl aluminium-water varies from about 1:1 to about 2:1.

U.S. Patent 5,086,025 describes a process for preparing a metallocene-aluminoxane catalyst supported on silica. Water impregnated silica is added to an aluminium trialkyl solution and, thereafter, the metallocene is added. By contacting reagents in a different order, undoubtedly inferior results are obtained. The contact is carried out with a molar ratio between the trialkyl aluminium and water comprised between about 10:1 and 1:1 and, preferably, between about 5:1 and 1:1. Useable metallocenes are all the cyclopentadienyl derivatives of transition metals. Those preferred are zirconocenes and titanocenes, among which substituted or unsubstituted cyclopentadienyl derivatives and compounds having two unsubstituted cyclopentadienes linked with a bridging group are exemplified. Preferred aluminium trialkyls are trimethyl aluminium and triethyl aluminium. Yields in polyolefins are extremely low.

Alkyl aluminium compounds with alkyl groups having three or more carbon atoms have rarely been used in this kind of catalyst systems.

U.S. Patent 5,006,500 describes a catalyst for the polymerization of α-olefins comprising the reaction product of:
(a) silica gel having a content of adsorbed water equal to 6-20% by weight,
(b) a mixture of trimethyl aluminium (TMA) and triisobutyl aluminium (TIBA) in molar ratio comprised between 2:1 and 1000:1, and
(c) a metallocene of a metal belonging to group IV and/or V B.
In example 4 (comparison example) ethylene is polymerized in the presence of a catalyst comprising di-(n-butylcyclopentadienyl) zirconium dichloride, TIBA and silica gel containing 12.8% of water. The molar ratio TIBA/water is 0.86:1. The quantity of polyethylene obtained is about 20 times lower than the quantity obtained in example 1 wherein a mixture TMA/TIBA is used.

In European Patent application 384,171, catalysts suitable for the polymerization of olefins are described, which comprise the reaction product between:
(a) a metallocene compound having the formula:

   (C₅R'ₙ)ₘR''ₚ(C₅R'ₙ)MX₃₋ₘ

   wherein (C₅R'ₙ) is a cyclopentadienyl group, substituted or not, and where two or four R' substituents of a same cyclopentadienyl group can form one or two ring having 4 to 6 carbon atoms; R'' is a divalent radical bridging the two cyclopentadienyl groups; X can be, for instance an halogen atom; M is a transition metal in valence state of 3 or 4 selected from Ti, Zr and Hf; p is O or 1; m is O, 1 or 2; when m=O, p is=O and when p=O at least one radical R' is different from hydrogen; n=4 when p=1 and n=5 when p=O; and
(b) an alumoxane compound of formula: 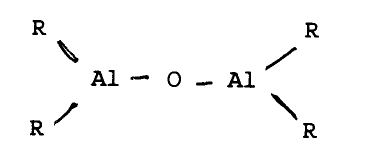 wherein the substituents R are alkyl, alkenyl or alkylaryl radicals having 2 to 20 carbon atoms.
The alumoxane compounds (b) are prepared by reaction of the corresponding aluminium trialkyl with water vapor in 2:1 molar ratio.

In European patent application 381,184, catalysts suitable for the polymerization of ethylene and α-olefins and mixtures thereof are described, which comprise the reaction product between:
(a) a zirconocenic compound of the formula:

   (C₅R'ₙH₅₋ₙ)R''ₚ(C₅R'ₘH₅₋ₘ)ZrX_{q}

   wherein (C₅R'ₙH₅₋ₙ) and (C₅R'ₘH₅₋ₘ) are cyclopentadienyl groups, substituted or not, and where two or four R' substituents of a same cyclopentadienyl group can form one or two ring having 4 to 6 carbon atoms; R'' is a divalent radical bridging the two cyclopentadienyl groups; X can be, for instance an halogen atom; q is 1 if Zr is trivalent and is 2 if Zr is tetravalent; p is O or 1; and
(b) a trialkyl-aluminium compound or an alkyl-aluminum monohydride.
Particularly suitable catalysts are obtained from compounds wherein groups (C₅R'ₙH₅₋ₙ) and (C₅R'ₘH₅₋ₘ) are pentamethyl-cyclopentadienyl or indenyl groups.

It has now been found that zirconocenes according to the above mentioned European patent application No. 381,184 in the presence of aluminium trialkyls or aluminium alkylhydrides do not give catalysts which are active in the polymerization of olefins.

However, it has unexpectedly been found that zirconocenes of the above type and other cyclopentadienyl compounds give catalysts endowed with very high activity in the polymerization of olefins in the presence of aluminium-alkyl compounds having non-straight alkyl groups and of water.

The catalysts of the present invention consisting essentially of the product obtainable by contacting the following components:
(A) a cyclopentadienyl compound of the general formula (I):

   (C₅R¹ₓ₋ₘH₅₋ₓ)R²ₘ(C₅R¹_{y-m}H_{5-y})ₙMQ₃₋ₙ (I)

   wherein M is a metal selected from the group consisting of Ti, Zr and Hf; C₅R¹ₓ₋ₘH₅₋ₓ and C₅R¹_{y-m}H_{5-y} are equally or differently substituted cyclopentadienyl rings; the substituents R¹, same or different from each other, are alkyl, alkenyl, aryl, alkylaryl or arylalkyl radicals containing from 1 to 20 carbon atoms, which may also contain Si or Ge atoms, or groups Si(CH₃)₃, or two or four substituents R¹ of the same cyclopentadienyl group can form one or two rings having from 4 to 6 carbon atoms; R² is a bridging group which links the two cyclopentadienyl rings and is selected among CR³₂, C₂R³₄, SiR³₂, Si₂R³₄, GeR³₂, Ge₂R³₄, R³₂SiCR³₂, NR¹ or PR¹, wherein the substituents R³, same or different from each other, are R¹ or hydrogen, or two or four substituents R³ can form one or two rings having from 3 to 6 carbon atoms; the substituents Q, same or different from each other, are hydrogen, halogen atoms, OH, SH, R¹, OR¹, SR¹, NR¹₂ or PR¹₂; m can be O or 1; n can be O or 1, being 1 when m=1; x is an integer comprised between m+1 and 5, preferably between (m+2) and 5; y is an integer comprised between m and 5;
(B) an organometallic aluminium compound of the formula (II):

   AlR⁴_{3-z}H_{z} (II)

   wherein the substituents R⁴, same or different from each other, are alkyl, alkenyl or alkylaryl radicals containing from 1 to 10 carbon atoms, which may also contain Si or Ge atoms, at least one of the substituents R⁴ being different from a straight alkyl group; z can be O or 1; and
(C) water.

The molar ratio between the organometallic aluminium compound and water is in the range of from 1:1 to 100:1, preferably, between 1:1 and 50:1;
with the proviso that at least part of the aluminium is present in a form different from an alumoxane compound of formula (III): 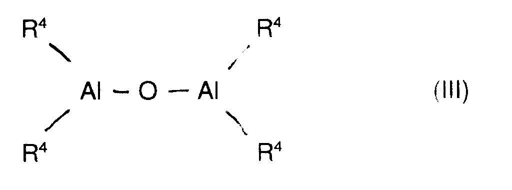 wherein the substituents R⁴, same or different from each other, are as defined above.

The molar ratio between the aluminium and the metal of the cyclopentadienyl compound is in the range of from about 100 to 10,000, preferably from about 500 to 5,000, more preferably from about 1,000 to 2,000.

Preferred cyclopentadienyl compounds according to the present invention are those of formula (I) in which the metal M is zirconium.

In the case of m=O, particularly suitable cyclopentadienyl compounds are those in which, the C₅R¹ₓ₋ₘH₅₋ₓ and C₅R¹_{y-m}H_{5-y} groups are tetramethyl-cyclopentadienyl, pentamethyl-cyclopentadienyl, indenyl or 4,5,6,7- tetrahydroindenyl groups, and the substituents Q are chlorine atoms, hydrocarbyl groups containing from 1 to 7 carbon atoms, preferably methyl groups, or hydroxyl groups.

Non limitative examples of cyclopentadienyl compounds of formula (I) wherein m=O are:

| | | |
|---|---|---|
| (Me₃Cp)₂MCl₂ | (Me₄Cp)₂MCl₂ | (Me₅Cp)₂MCl₂ |
| (Me₅Cp)₂MMe₂ | (Me₅Cp)₂M(OMe)₂ | (Me₅Cp)₂M(OH)Cl |
| (Me₅Cp)₂M(OH)₂ | (Me₅Cp)₂M(C₆H₅)₂ | (Me₅Cp)₂M(CH₃)Cl |
| (EtMe₄Cp)₂MCl₂ | [(C₆H₅)Me₄Cp]₂MCl₂ | (Et₅Cp)₂MCl₂ |
| (Me₅Cp)₂M(C₆H₅)Cl | (Ind)₂MCl₂ | (Ind)₂MMe₂ |
| (H₄Ind)₂MCl₂ | (H₄Ind)₂MMe₂ | {[Si(CH₃)₃]Cp}₂MCl₂ |
| {[Si(CH₃)₃]₂Cp}₂MCl₂ | (Me₄Cp)(Me₅Cp)MCl₂ | (Me₅Cp)MCl₃ |
| (Me₅Cp)MBenz₃ | (Ind)MBenz₃ | (H₄Ind)MBenz₃ |
| wherein Me=methyl, Et=ethyl, Cp=cyclopentadienyl, Ind=indenyl, H₄Ind=4,5,6,7-tetrahydroindenyl, Benz=benzyl. M is Ti, Zr or Hf, preferably is Zr. | | |

In the case of m=1, particularly suitable cyclopentadienyl compounds are those in which the C₅R¹ₓ₋ₘH₅₋ₓ, and C₅R¹_{y-m}H_{5-y} groups are tetramethyl-cyclopentadienyl, indenyl, 2-methyl-indenyl, 4,7-dimethyl-indenyl, 2,4,7-trimethyl-indenyl, 4,5,6,7-tetrahydroindenyl, 2-methyl-4,5,6,7-tetrahydroindenyl, 4,7-dimethyl-4,5,6,7-tetrahydroindenyl, 2,4,7-trimethyl-4,5,6,7-tetrahydroindenyl, or fluorenyl groups, R² is a (CH₃)₂Si or a C₂H₄ divalent group, and the substituents Q are chlorine atoms, hydrocarbyl groups containing from 1 to 7 carbon atoms, preferably methyl groups, or hydroxyl groups.

Non limitative examples of cyclopentadienyl compounds of formula (I) wherein m=1 are:

| | | |
|---|---|---|
| Me₂Si(Me₄Cp)₂MCl₂ | Me₂Si(Me₄Cp)₂MMe₂ | Me₂C(Me₄Cp)(MeCp)MCl₂ |
| Me₂Si(Ind)₂MCl₂ | Me₂Si(Ind)₂MMe₂ | Me₂Si(Me₄Cp)₂MCl(OEt) |
| C₂H₄(Ind)₂MCl₂ | C₂H₄(Ind)₂MMe₂ | C₂H₄(Ind)₂M(NMe₂)₂ |
| C₂H₄(H₄Ind)₂MCl₂ | C₂H₄(H₄Ind)₂MMe₂ | C₂H₄(H₄Ind)₂M(NMe₂)OMe |
| Ph(Me)Si(Ind)₂MCl₂ | Ph₂Si(Ind)₂MCl₂ | Me₂C(Flu)(Cp)MCl₂ |
| C₂H₄(Me₄Cp)₂MCl₂ | C₂Me₄(Ind)₂MCl₂ | Me₂SiCH₂(Ind)₂MCl₂ |
| C₂H₄(2-MeInd)₂MCl₂ | C₂H₄(3-MeInd)₂MCl₂ | C₂H₄(4,7-Me₂Ind)₂MCl₂ |
| C₂H₄(5,6-Me₂Ind)₂MCl | C₂H₄(2,4,7-Me₃Ind)₂MCl₂ | |
| C₂H₄(3,4,7-Me₃Ind)₂MCl₂ | C₂H₄(2-MeH₄Ind)₂MCl₂ | |
| C₂H₄(4,7-Me₂H₄Ind)₂MCl₂ | C₂H₄(2,4,7-Me₃H₄Ind)₂MCl₂ | |
| Me₂Si(2-MeInd)₂MCl₂ | Me₂Si(3-MeInd)₂MCl₂ | Me₂Si(4,7-Me₂Ind)₂MCl₂ |
| Me₂Si(5,6-Me₂Ind)₂MCl | Me₂Si(2,4,7-Me₃Ind)₂MCl₂ | |
| Me₂Si(3,4,7-Me₃Ind)₂MCL₂ | Me₂Si(2-MeH₄Ind)₂MCl₂ | |
| Me₂Si(4,7-Me₂H₄Ind)₂MCl₂ | Me₂Si(2,4,7-Me₃H₄Ind)₂MCl₂ | |
| Me₂Si(Flu)₂MCl₂ | C₂H₄(Flu)₂MCl₂ | |
| wherein Me=methyl, Cp=cyclopentadienyl, Ind=indenyl, Flu=fluorenyl, Ph=phenyl, H₄Ind=4,5,6,7-tetrahydroindenyl. M is Ti, Zr or Hf, preferably is Zr. | | |

Non limitative examples of organometallic aluminium compounds of formula (II) are:

| | | | |
|---|---|---|---|
| Al(iBu)₃, | AlH(iBu)₂, | Al(iHex)₃, | Al(C₆H₅)₃ |
| Al(CH₂C₆H₅)₃, | Al(CH₂CMe₃)₃, | Al(CH₂SiMe₃)₃, | AlMe₂iBu, |
| AlMe(iBu)₂. | | | |

Preferably, all substituents R⁴ of the organometallic aluminium compound are non-straight alkyl, alkenyl or alkylaryl radicals having 3 to 10 carbon atoms. More preferably, all substituents R⁴ of the organometallic aluminium compound are isoalkyl radicals. A particularly suitable organometallic aluminium compound is the triisobutyl aluminium (TIBAL).

The components of the catalysts of the present invention can be brought into contact in different manners.

It is possible, for example, to contact the aluminium compound with water first and, thereafter, contact them with the cyclopentadienyl compound.

It is, therefore, another object of the present invention a catalyst consisting essentially of the product obtainable by contacting the following components:
(A) a cyclopentadienyl compound of the formula (I):

   (C₅R¹ₓ₋ₘH₅₋ₓ)R²ₘ(C₅R¹_{y-m}H_{5-y})ₙMQ₃₋ₙ (I)

   wherein M, C₅R¹ₓ₋ₘH₅₋ₓ, C₅R¹_{y-m}H_{5-y}, R¹, R², Q, m, n, x, y are as defined above; and
(B) the reaction product between water and an organometallic aluminium compound of the formula (II):

   AlR⁴_{3-z}H_{z} (II)

   wherein R⁴ and z are as defined above, at least one of the substituents R⁴ being different from a straight alkyl group.

The molar ratio between the organometallic aluminium compound and water is comprised between 1:1 and 100:1, preferably, between 1:1 and 50:1;
with the proviso that at least part of the aluminium is present in a form different from an alumoxane compound of formula (III): 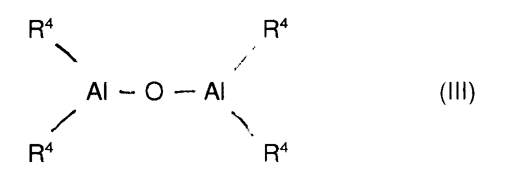 wherein the substituents R⁴, same or different from each other, are as defined above.

Other ways to bring into contact the components of the catalysts of the present invention are possible, such as, for instance, to contact first the alkyl aluminium compound with the cyclopentadienyl compound and, thereafter, with water.

According to a particular embodiment of the invention, water can be gradually added to the alkyl aluminium compound in solution in an aliphatic or aromatic inert hydrocarbon solvent such as, for example, heptane or toluene. Thereafter, the cyclopentadienyl compound in solution in a solvent such as, for example, toluene, can be added to the previous solution.

According to another embodiment of the invention, water can be introduced into the monomer or into one of the monomers to be polymerized; in this case the alkyl aluminium compound and the cyclopentadienyl compound can be precontacted before being used in the polymerization, and then be brought into contact with the wet monomer(s).

According to a further embodiment of the invention, water can be reacted in combined form as hydrated salt, or it can be adsorbed on an inert support, such as silica.

According to a still further embodiment of the invention, the alkyl aluminium compound can be allowed to react with boric anhydride or with boric acid.

When the catalyst of the invention is used in the omo- or co-polymerization of ethylene, it is particularly desirable that the components of the catalyst be contacted in such a manner that, in the catalyst, at least part of the organometallic aluminium compound is still present in its unreacted form, and is detectable with the commonly used analytic methods.

The catalysts according to the present invention can be used on inert supports. This is obtained by depositing the cyclopentadienyl compound, or the product of the reaction of this compound with the alkyl aluminium compound pre-reacted with water, or the aluminium alkyl compound pre-reacted with water, or the aluminium alkyl compound pre-reacted with water and subsequently the cyclopentadienyl compound, on inert supports such as, for example, silica, alumina, styrene-divinylbenzene copolymers or polyethylene.

The thus obtained solid compound, combined with a further addition of alkyl aluminium compound either as such or prereacted with water, if necessary, is usefully used in the gas phase polymerization.

As indicated above, the catalysts of the present invention can be used in the polymerization reactions of olefins.

An interesting use of the catalysts according to the present invention is for the homopolymerization of ethylene and, in particular, for the preparation of HDPE.

Another interesting use of the catalysts according to the present invention is for the copolymerization of ethylene with higher olefins.

In particular, the catalysts of the invention can be used for the preparation of LLDPE. The LLDPE copolymers which are obtained have a content of ethylene units comprised between 80 and 99% by mols. Their density is comprised between 0.87 and 0.95 g/cc and they are characterized by a uniform distribution of the alpha-olefin comonomers.

The olefins useable as comonomers comprise alpha-olefins of the formula CH₂=CHR wherein R is a straight, branched or cyclic alkyl radical containing from 1 to 20 carbon atoms, and cycloolefins.

Examples of these olefins are propylene, 1-butene, 1-pentene, 4-methyl-1-pentene, 1-hexene, 1-octene, 1-decene, 1-dodecene, 1-tetradecene, 1-esadecene, 1-octadecene, 1-eicosene, allylcyclohexane, cyclopentene, cyclohexene, norbornene, 4,6-dimethyl-1-heptene.

The copolymers may also contain small proportions of units deriving from polyenes, in particular from straight or cyclic, conjugated or non conjugated dienes such as, for example, 1,4-hexadiene, isoprene, 1,3-butadiene, 1,5-hexadiene, 1,6-heptadiene.

The units deriving from the alpha-olefins of the formula CH₂=CHR, from the cycloolefins and/or from the polienes are present in the copolymers in amounts of from 1% to 20% by mole.

The catalyst of the invention can also be used for the preparation of elastomeric copolymers of ethylene with alpha-olefins of the formula CH₂=CHR, wherein R is an alkyl radical having from 1 to 10 carbon atoms, optionally containing small proportions of units deriving from polyenes.

The saturated elastomeric copolymers contain from 15% to 85% by mole of ethylene units, the complement to 100 being constituted by units of one or more alpha-olefins and/or of a non conjugated diolefin able to cylopolymerize. The unsaturated elastomeric copolymers contain, together with the units deriving from the polymerization of ethylene and alpha-olefins, also small proportions of unsaturated units deriving from the copolymerization of one or more polyenes. The content of unsaturated units can very from 0.1 to 5% by weight, and it is preferably comprised between 0.2 and 2% by weight.

The copolymers obtainable are characterized by valuable properties such as, for example, low content of ashes and uniformity of distribution of the comonomers within the copolymeric chain.

The useable alpha-olefins comprise, for example, propylene, 1-butene, 4-methyl-1-pentene. As non conjugated diolefins able to cyclopolymerize, 1,5-hexadiene, 1,6-heptadiene, 2-methyl-1,5-hexadiene can be used. As polyenes able to give unsaturated unit, the following compounds can be used: conjugated straight dienes, such as 1,4-hexadiene trans, 1,4-hexadiene cis, 6-methyl-1,5-heptadiene, 3,7-dimethyl-1,6-octadiene, 11-methyl-1,10-dodecadiene; monocyclic diolefins such as, for example, cis-1,5-cyclooctadiene and 5-methyl-1,5-cyclooctadiene; bicylic diolefins such as, for example, 4,5,8,9-tetrahydroindene and 6- and/or 7-methyl-4,5,8,9-tetrahydroindene; alkenyl or alkyliden-norbornenes such as, for example, 5-ethyliden-2-norbornene, 5-isopropyliden-2-norbornene, exo-5-isopropenyl-2-norbornene; polycyclic diolefins, such as, for example, bicyclopentadiene, tricyclo-[6.2.1.0^{2.7}]-4,9-undecadiene and the 4-methyl derivative thereof.

A further interesting use of the catalysts according to the present invention is for the preparation of cycloolefin polymers. Monocyclic and polycyclic olefin monomers can be either homopolymerized or copolymerized, also with linear olefin monomers. Non limitative examples of cycloolefin polymers which can be prepared with the catalyst of the present invention are described in the European patent applications No. 501,370 and No. 407,870, the contents of which are understood to be incorporated in the present description as a result of their mention.

Polymerization processes which use the catalysts of the invention can be carried out in liquid phase, in the presence or not of an inert hydrocarbon solvent, or in gaseous phase. The hydrocarbon solvent can be either aromatic such as, for example, toluene, or aliphatic such as, for example, propane, hexane, heptane, isobutane, cyclohexane.

The polymerization temperature generally ranges from about 0°C to about 250°C. In particular, in the processes for the preparation of HDPE and LLDPE, it is generally comprised between 20°C and 150°C and, particularly, between 40°C and 90°C, whereas for the preparation of the elastomeric copolymers it is generally comprised between O°C and 200°C and, particularly, between 20°C and 100°C.

The molecular weight of polymers can be varied by simply varying the polymerization temperature, the type or the concentration of the catalyst components or by using molecular weight regulators such as, for example, hydrogen.

The molecular weight distribution can be varied by using mixtures of different cyclopentadienyl compounds, or by carrying out the polymerization in many steps which differ for the polymerization temperatures and/or for the concentrations of the molecular weight regulator.

Particularly interesting results are obtained when the components of the catalyst are contacted among them before the polymerization. The contact time is generally comprised between 1 and 60 minutes, preferably between 5 and 20 minutes. The precontact concentrations for the cyclopentadienyl compound are comprised between 10⁻² and 10⁻⁸ mol/l, whereas for the product of the reaction between the alkyl aluminium and water they are comprised between 10 and 10⁻³ mol/l. The precontact is generally carried out in the presence of a hydrocarbon solvent and, optionally, of small amounts of monomer.

The following examples are supplied for purely illustrative and not limiting purpose.

### CHARACTERIZATIONS

NMR analysis of polymers have been carried out in C₂D₂Cl₄ at 110°C, and the butene percentage has been calculated according to the method described in "Hsieh and Randall, Macromolecules, 1982, 15, 353-360".

DSC analysis have been carried out on a DSC7 Perkin Elmer apparatus at scanning speed of 10°C/minute; values obtained on second melting are reported.

The viscosities have been measured in tetrahydronaphthalene (orthodichlorobenzene for 1,5-hexadiene polymers) at 135°C.

The distributions of molecular weights have been determined by GPC carried out by means of a WATERS 150 apparatus in orthodichlorobenzene at 135°C.

Components (A) have been synthetized as follows:

### BIS(PENTAMETHYLCYCLOPENTADIENYL)ZIRCONIUM DICHLORIDE

The bis(pentamethylcyclopentadienyl)zirconium dichloride used has been bought from Strem.

### BIS(PENTAMETHYLCYCLOPENTADIENYL)ZIRCONIUM DIMETHYL

The synthesis has been carried out according to the method described in "Organometallics, 1988, 7, 818-825".

### (PENTAMETHYLCYCLOPENDADIENYL)ZIRCONIUMTRIBENZYL

The synthesis has been carried our according to the method described in "Organometallics, 1982, 1, 793".

1.0453 g of (Me₅Cp)ZrCl₃ (Strem) were suspended in 30 ml of anhydrous ethyl ether and cooled to -78°C. By means of a syringe, 10 ml of a 1.0 molar solution of benzylmagnesium bromide in ether were added while keeping the mixture under stirring for 1 hour at -70°C. Thereafter, the temperature was raised to the room temperature and the stirring was continued for other 3 hours. Then, the mixture was dried to dryness, treated with pentane (60 ml), filtered and concentrated by evaporation up to 15 ml. Finally, a crystalline yellow solid was separated by filtration. 0.89 g of (Me₅Cp)Zr(CH₂C₆H₅)₃, pure from NMR analysis, were obtained.

### DIMETHYLSILANDIYL-BIS(2,3,4,5,-TETRAMETHYLCYCLOPENTADIENYL)ZIRCONIUM DICHLORIDE

### a) Preparation of tetramethylcyclopentadiene

Into a 1 liter five-necked round-bottomed glass flask, equipped with mechanical stirrer, cooler, thermometer, dropping funnel and nitrogen inlet tap, 3.8 g (99.6 mmols) of LiAlH₄ and 200 ml of anhydrous ethyl ether were fed under nitrogen stream.

Thereafter, the temperature was left to return to room temperature and the mixture was kept stirred for further 40 hours.

The flask was cooled to 0°C by a ice bath; then 100 ml of water and thereafter 100 ml of 10% sulfuric acid were very slowly added; separation in two phases was obtained.

The aqueous phase was extracted three times with ether, then the organic phases were collected, washed first with a saturated solution of sodium bicarbonate then with water, and dried on anhydrous sodium sulfate.

After filtration, the ether solution was concentrated to 700 ml and introduced into a 1 liter round-bottomed flask provided with mechanical stirrer and cooler together with 6.15 g (32.3 mmols) of p-toluensulfonic monohydrate acid. This was kept under stirring for 3 hours at room temperature.

The aqueous layer formed on the bottom was removed, the ether phase was washed with 50 ml of a saturated sodium bicarbonate solution and then with water. This was dried on anhydrous sodium sulfate and, after filtration, the ether was completely evaporated. 36.8 g of tetramethylcyclopentadiene (purity=90%, yield=85%) were obtained. The compound was characterized by ¹H-NMR.

### b) Preparation of dimethylbis(tetramethylcyclopentadienyl)silane.

Into a 2 liter five-necked round-bottomed glass flask, provided with mechanical stirrer, cooler, thermometer, dropping funnel and nitrogen inlet tap, 32 g (262 mmols) of tetramethylcylopentadiene and 1200 ml of anhydrous tetrahydrofuran were fed.

The temperature was lowered to 0°C and 165 ml of bytyllithium (1.6 M in hexane, 264 mmols) were added dropwise over 1.5 hour.

The mixture was kept stirred for further 10 hours, allowing the temperature to return to room temperature.

Thereafter, 17 g (132 mmols) of dichloromethylsilane dissolved in 80 ml of anhydrous tetrahydrofuran were introduced dropwise over 1 hour, at room temperature; after the addition, the whole was kept under reflux for 5 days and at the end an almost clear solution was obtained. The tetrahydrofuran was removed by evaporation under vacuum and the residue was extracted with 200 ml of petroleum ether (boiling point=40-70°C). After filtration and evaporation of the solvent under vacuum, 36.95 g of dimethyl-bis(2,3,4,5-tetramethylcyclopentadienyl)silane were recovered. The product was characterized by ¹H-NMR.

### c) Preparation of dimethylsilandiyl-bis(2,3,4,5-tetramethyl cyclopentadienyl)zirconium dichloride

The preparation method described in "Jutzi P., Dickbreder R., Chem. Ber., 1986, 119, 1750-1754" has been followed (with slight modifications).

All the operations were carried out under inert atmosphere.

A solution of 9.26 g (30.81 mmols) of dimethylbis-(2,3,4,5-tetramethyl-cyclopentadienyl)silane in 170 ml of anhydrous tetrahydroduran was treated at 0°C with 40.5 ml of butyllithium 1.6 M in hexane. The mixture was kept stirred for 16 hours at the same temperature, and thereafter was allowed to return to room temperature while keeping under stirring for one hour.

After having completely evaporated the solvent, the residue was washed twice with 50 ml of hexane and once with pentane.

The residue was dried, thus obtaining 7.85 g of the lithium salt [Me₂Si(Me₄C₅)₂Li₂ (1)]. 5.98 g of the lithium salt (1) were dissolved in 80 ml of anhydrous tetrahydrofuran (THF) and were added (at 0°C and dropwise) to a suspension of 7.22 g of ZrCl₄.2THF in 80 ml of tetrahydrofuran.

This was heated under reflux for 2 hours, was left to stay for overnight at room temperature and thereafter the solvent was completely evaporated. The residue was extracted twice with 70 ml of hot toluene (about 80°C) and the solution was allowed to crystallize at -30°C.

By filtration, 1.3 g (14.7%) of crystalline product were obtained. The purity has been verified by ¹H-NMR.

### DIMETHYLSILANDIYLBIS(INDENYL)ZIRCONIUM DICHLORIDE

### a) Preparation of bis(indenyl)dimethylsilane

In a 1 liter 3-necked round-bottomed flask, provided with funnel and nitrogen tap, 30 ml of indene (257 mmols) and 300 ml of anhydrous tetrahydrofuran were fed. The mixture was cooled to -80°C and 170 ml of n-butyllithium (1.6 M in hexane, 272 mmols) were slowly added dropwise. The mixture was allowed to return to room temperature, was kept under agitation for 3 hours and was added to a solution of 15.6 ml (129 mmols) of dichlorodimethylsilane in 200 ml of tetrahydrofuran.

After being left to react overnight, this was treated with 20 ml of water. The phases were separated, the solvent was evaporated under vacuum and the residue was treated with hexane and dried on anhydrous sodium sulfate. After having evaporated the hexane, 38.5 g of red oily product which was purified by chromatografy on silica gel (eluent=hexane) were obtained. The yield was 18.8 g (51%).

### b) Preparation of dimethylsilandiyl-bis(indenil)zirconium dichloride

The procedure described in "W.A. Heramann et al., Angew. Chem Int. Ed. Engl., 1989, 28, 1511" has been followed.

9.4 g of bis(indenyl)dimethylsilane (32.59 Mm) dissolved in 70 ml of anhydrous tetrahydrofuran were treated at -78°C with slow dropwise addition of 40.7 ml of n-butyllithium (1.6 M in hexane, 65.2 mmols), thus obtaining a green solution. This solution was allowed to return to room temperature while keeping under stirring for one hour.

The solution, which changed to red colour, was added dropwise over about one hour and at room temperature into a suspension of 12.4 g of ZrCl₄.2THF (32.9 mmols) in 70 ml of anhydrous tetrahydrofuran and was left under stirring for 18 hours. An orange-yellow precipitate was formed.

The reaction mixture was reduced to half volume by evaporation of the solvent under vacuum, the precipitate was collected by filtration and washed first with a small quantity of tetrahydrofuran at -20°C and then with some ethyl ether. The yield was 4.97 g (34%).

### ETHYLENE-BIS(4,5,6,7-TETRAHYDROINDENYL)ZIRCONIUM DICHLORIDE

### a) Preparation of 1,2-bis(indenyl)ethane

The preparation described in "Ewen J., J. Am. Chem. Soc., 1987, 109, 6544, Suppl. mat." was carried out.

In a 2 litre 2-necked round-bottomed flask, 50.8 g of indene (437 mmols) were dissolved under inert atmosphere with 500 ml of tetrahydrofuran and cooled to -78°C. Then, 175 ml of n-butyl lithium (2.5 M in hexane, 437.5 mmols) were slowly added dropwise over 1 hour. The mixture was allowed to heat up to room temperature and was kept stirred for 4 hours.

Then the mixture was cooled to -78°C and 40.42 g of 1,2-dibromoethane (215 mmols) dissolved in 100 ml of tetrahydrofuran were added dropwise over 20 minutes. At the end of the addition the temperature was raised to 50°C and, after stirring for 12 hours, was cooled up to room temperature and 20 ml of water were added.

The organic phase was dried and the residue was extracted with pentane.

By evaporation under vacuum 28.65 g of product were obtained. The yield was 51.6%.

### b) Preparation of ethylene-bis(indenyl)zirconium dichloride

In a 250 ml two-necked round-bottomed flask, provided with cooler, 8 g (31 mmols) of 1.2-bisindenylethane and 100 ml of anhydrous tetrahydrofuran were fed, thus obtaining a yellow solution.

After cooling to -78°C, 40 ml of n-butyllithium (1.6 M in hexane, 64 mmols) were added dropwise in the solution thus obtaining a precipitate which, by heating, dissolves again giving a reddish-yellow solution.

In a 250 ml four-necked round-bottomed flask provided with cooler, 8.67 g of ZrCl₄ (37.2 mmols) were introduced. After cooling to -196°C, 50 ml of tetrahydrofuran were condensed in it (very stark exothermic reaction). This was left to reach room temperature and then was heated under reflux for 40 minutes.

At room temperature and whilst stirring the solution of the lithium salt of the bisindenylethane was added to the solution of the adduct ZrCl₄/THF and the mixture was kept stirred for 20 hours in the dark.

At 0°C gaseous HCl was bubbled in, thus obtaining a yellow solution together with a precipitate of the same colour. The solution was concentrated under vacuum by evaporating a part of the solvent, it was cooled to -20°C and filtered off.

The precipitate was further purified by extraction with dichloromethane, thus obtaining 2.3 g (14.7%) of product.

### c) Preparation of ethylene-bis(4,5,6,7-tetrahydroindenyl) zirconium dichloride

The method of preparation described in "F.R.W.P. Wild, M. Wasiucionek, G. Huttner and H.H. Brintzinger, J. Organomet. Chem. 288, 1985, 63" was followed.

A suspension of 1 g of ethylene-bis(indenyl)zirconium dichloride (2.4 mmols) and 80 mg of PtO₂ in 25 ml of CH₂Cl₂ was hydrogenated in autoclave under 100 bar H₂ for half an hour at room temperature The reaction mixture was diluted with 500 ml of CH₂Cl₂, was filtered off and the solvent was evaporated under vacuum.

The residue, after having been washed with pentane, was recrystallized from hot toluene. 640 mg (64%) of product were thus obtained.

### PREPARATION OF BIS(INDENYL)ZIRCONIUMDICHLORIDE

All the operations were carried out under inert atmosphere.

7.0 ml of indene (60 mmols) were dissolved in 20 ml of anhydrous tetrahydrofuran, the solution was cooled to -78°C and was treated with 40.0 ml of n-butyllithium (1.5 M in hexane, 60 mmols). This was heated to room temperature, thus obtaining a red coloured solution.

In a 100 ml round-bottomed flask provided with reflux cooler, 7 g of ZrCl₄ (30 mmols) were cooled to -78°C and treated with 30 ml of tetrahydrofuran (exothermic reaction). Thereafter, the whole was heated under reflux for 30 minutes, until a clear, brown coloured solution was obtained.

The solution of indenyl lithium was added, at room temperature, to the solution of the ZrCl₄/THF adduct. It was kept stirring for 2 hours (a yellow suspension was formed) and thereafter the solvent was completely evaporated.

The residue was suspended in ethyl ether, was filtered off, washed repeatedly with ether and extracted with dichloromethane.

The solution was dried and the product was washed with ether and then with pentane: 4.35 g of bisindenylzirconiumdichloride were thus obtained (36.8%).

### ETHYLENE-BIS(4,7-DIMETHYL-1-INDENYL)ZIRCONIUM DICHLORIDE

### a) Preparation of 4,7-dimethylindene

The synthesis has been carried out according to the method described in "Organometallics, 1990, 9, 3098" (54% yield from p-xylene).

### b) Preparation of 1,2-bis(4,7-dimethyl-3-indenyl)ethane

38.2 g (265 mmol) of 4,7-dimethylindene was dissolved in 350 ml of tetrahydrofuran and the solution was cooled to 0°C. Then 165 ml of n-butyllithium (1,6 M in hexane, 264 mmol) was added dropwise over 2.5 hours. After warming to room temperature and stirring for 4 hours a purple solution of 4,7-dimethylindenyl-lithium was obtained. This solution was cooled to -70°C and treated dropwise with 25,3 g of 1,2-dibromoethane (135 mmol) in 15 ml of tetrahydrofuran over 35 min. After warming to room temperature, a pale yellow solution was obtained, and then water was added. The organic phase was collected and dried over Na₂SO₄. The solvent was removed by vacuum evaporation to provide 20 g of crude product (48% yield).

### c) Preparation of rac- and meso- ethylene-bis(4,7-dimethyl-1-indenyl)zirconium dichloride

A suspension of 10 g of 1,2-bis(4,7-dimethyl-3-indenyl) ethane (31.8 mmol) in 80 ml of tetrahydrofuran was added via cannula to a stirred suspension of 2,82 g of KH (70.3 mmol) in 160 ml of tetrahydrofuran.

After hydrogen generation had subsided, the resulting brownish solution was separated from excess KH. This solution and a solution of 12 g of ZrCl₄(THF)₂ (31.8 mmol) in 250 ml of tetrahydrofuran were both added dropwise via cannula to a flask containing 50 ml of rapidly stirring tetrahydrofuran over 3 hours.

A yellow solution and a precipitate formed. After removing the solvent in vacuo, the orange-yellow residue (mixture of racemic and meso isomers 2.33:1 by ¹H NMR) was extracted with CH₂Cl₂ until all orange product had dissolved. The 1.7 g of yellow solid resulted to be a single stereoisomer, namely the meso (11.3% yield).

Evaporation of CH₂Cl₂ from the orange solution gave 4.9 g of an orange solid corresponding to a mixture of 93.7% racemic and 6.3% meso isomers (32.5% yield). This solid was then recrystallized in toluene at -20°C.

### EXAMPLE 1

### Polymerization of ethylene with (Me₅Cp)₂ZrCl₂ in toluene

Into a 1 liter glass Büchi autoclave equipped with magnetic stirrer and thermostated at 50°C, 400 ml of toluene were introduced under nitrogen atmosphere. The nitrogen was removed by saturating with ethylene at 1 atm. In 10 ml of toluene, 16.2 mg of (Me₅Cp)ZrCl₂ were dissolved and 0.06 ml of this solution was added to 10 ml of toluene solution of the reaction product between triisobutyl aluminium and water containing 2.04 mmols of Al and 1.70 mmols of water (molar ratio Al/H₂O=1.2; molar ratio Al/Zr=9000). After a five minute aging the solution was injected in the autoclave under ethylene flow. The polymerization was carried out at 50°C and under 4 atm of ethylene for 1 hour, yielding 6.63 g of polymer (I.V. = 9.90 dl/g).

### EXAMPLE 2

### Polymerization of ethylene with (Me₅Cp)₂ZrCl₂ in toluene

The same procedure described in Example 1 was carried out, except that the catalyst solution was prepared as follows. 12.8 mg of (Me₅Cp)₂ZrCl₂ were dissolved in 10 ml of toluene and 0,08 ml of this solution was added to 10 ml of toluene solution of the reaction product between triisobutyl aluminium and water containing 2.04 mmols of Al and 0,68 mmols of water (molar ratio Al/H₂O = 3; molar ratio Al/Zr = 8650). 7.78 g of polymer were obtained (I.V. = 6.18 dl/g).

### EXAMPLES 3-6

### Polymerization of ethylene with Me₂Si(Me₄Cp)₂ZrCl₂ in propane

Into a 4.25 litre steel autoclave, equipped with magnetic stirrer, 2 litre of liquid propane, and the quantity of water reported in Table 1 were introduced under nitrogen atmosphere. Then, a solution of 3.4 mmols of aluminium triisobutyl in 10 ml of toluene and 1.00 mg of Me₂Si(Me₄Cp)₂ZrCl₂ were introduced. After 5 minutes in the absence of the monomer, the autoclave was thermostated at 50°C and ethylene was fed under a pressure of 7.1 absolute atm for 2 hours.

Results are reported in Table 1.

### EXAMPLE 7

### Polymerization of ethylene with Me₂Si(Me₄Cp)₂ZrCl₂ in propane

In a 4.25 l. steel autoclave equipped with a blade stirrer, 2.75 l. of liquid propane were introduced under anhydrous nitrogen atmosphere. The temperature was raised at 50°C and 10 ml of a toluene solution of TIBAL (4,5 mmol) to which 2,25 mmol of water had been added (reaction time = 30 min; reaction temperature = 0°C; Al/H₂O molar ratio = 2,0) precontacted with 1,00 mg of Me₂Si(Me₄Cp)₂ZrCl₂ for 5 minutes in the absence of monomers (Al/Zr molar ratio = 2,073), were introduced. Thereafter ethylene was fed under a pressure of 8.1 absolute atm for 2 hours. After removal of the unreacted monomers, the polymer was separated by washing with methanol and drying under vacuum, thus recovering 16 g of polymer (I.V. = 2.93 dl/g).

### EXAMPLE 8

### Polymerization of ethylene with Me₂Si(Me₄Cp)₂ZrCl₂ in propane

The same procedure described in Example 7 was carried out, but with the difference that 0,45 mmol of water were used (Al/H₂0 molar ratio = 10.0). 100 g of polymer were obtained (I.V. = 0.95 dl/g).

### EXAMPLE 9

### Polymerization of ethylene with Me₂Si(Me₄Cp)₂ZrCl₂ in propane

The same procedure described in Example 7 was carried out, but with the difference that 0.3 mmol of water were used (Al/H₂0 molar ratio = 15.0). 60 g of polymer were obtained (I.V. = 0.93 dl/g).

### EXAMPLES 10-14

### Polymerization of ethylene with Me₂Si(Me₄Cp)₂ZrCl₂ in hexane

Into a 1 liter glass autoclave, equipped with magnetic stirrer, 0.4 l of hexane (containing 2 ppm water) and the quantities of water reported in Table 2 were introduced under nitrogen atmosphere. Then, 1.8 ml of a 1 M toluene solution of aluminium triisobutyl and the quantities of Me₂Si(Me₄Cp)₂ZrCl₂ indicated in Table 2 were introduced. After 5 min in the absence of monomers, the autoclave was thermostated at 50°C and ethylene was fed at a pressure of 4 absolute atm. for 1 hour.

Results are reported in Table 2.

### COMPARISON EXAMPLE A

The same procedure described in Examples 14-18 was carried out, but using methylalumoxane (MAO) instead of TIBAL and water.

A commercial MAO (Schering, MW 1400) in 30% by weight toluene solution was used. After removal of the volatile fractions under vacuum, the glassy material was crushed until a white powder was obtained. This powder was treated under vacuum (0.1 mm Hg) at a temperature of 40 °C during 4 hours. 0.89 mmol of the resulting powder were used.

Results are reported in Table 2.

### EXAMPLE 15

### Polymerization of ethylene with rac-C₂H₄(4,7-Me₂-1-Ind)₂ZrCl₂ in propane

In a 4.25 l steel autoclave equipped with blade stirrer, 1.8 l of liquid propane were introduced under anhydrous nitrogen atmosphere. The temperature was raised at 50°C and a toluene solution of TIBAL (2,1 mmol) to which 1.05 mmol of water had been added (reaction time = 30 min; reaction temperature = 0°C; Al/H₂O molar ratio = 2.0), precontacted with 1.0 mg of rac-C₂H₄(4,7-Me₂-1-Ind)₂ZrCl₂ for 5 minutes in the absence of monomers (Al/Zr molar ratio = 1,000), was introduced. Thereafter ethylene was fed under a pressure of 8.1 absolute atm for 2 hours. After removal of the unreacted monomers, the polymer was separated by washing with methanol and drying under vacuum, thus recovering 107 g of polymer (I.V. = 2.2 dl/g).

### EXAMPLE 16

### Polymerization of ethylene with (Me₅Cp)Zr(CH₂C₆H₅)₃ in toluene

Into a 250 ml glass autoclave equipped with magnetic stirrer and thermostated at 50°C, 90 ml of toluene were introduced under nitrogen atmosphere. The nitrogen was removed by saturating with ethylene at 1 atm. Then 1.1 mg of (Me₅Cp)Zr(CH₂C₆H₅)₃ and an amount of the reaction product between AliBu₃ and water (molar ratio Al/H₂O=1.63) such to have a molar ratio Al/Zr=1000 were dissolved in 10 ml of toluene. After a 5 minute aging, the solution was injected into the autoclave under ethylene flow. The polymerization was carried out at 50°C, under a pressure of 4 bar-g of ethylene for 1 hour, yielding 2.5 g of polyethylene (I.V. = 8.14 dl/g).

### EXAMPLE 17

### Ethylene/propylene copolymerization with (Me₅Cp)Zr(CH₂C₆H₅)₃ in toluene

The same procedure described in Example 16 was carried out, but using an ethylene/propylene mixture (ratio C₃/C₂=5) which was continuously fed with a 0.5 l/h discharge flow. 2.45 g of copolymer were obtained, containing 30% by mols of propylene (I.V. = 1.99 dl/g). The melting temperature (Tₘ) is 73.8°C.

### EXAMPLES 18-24 AND COMPARISON EXAMPLE B

### Ethylene/propylene copolymerization in toluene

In a 250 ml glass autoclave, equipped with magnetic stirrer, thermostated at 50°C, 2.2 mmols of aluminium alkyl in 90 cc of toluene containing 0.55 mmols of H₂O and 0.0022 mmols of metallocene dissolved in 10 ml of anhydrous toluene were introduced under anhydrous nitrogen. After 5 minutes, in the absence of monomers, under a pressure of 5 absolute atmospheres, a mixture of ethylene and propylene in the desired quantities was fed. The monomer mixture was continuously introduced in the autoclave whilst stirring during the whole duration of the test, and the gaseous mixture was continuously discharged at a rate of 0.5 liter/minute. At the end the catalyst was deactivated by injecting 1 ml of metanol, the solution of the polymer was washed with 10 ml of 0.5N HCl and the polymer was precipitated with methanol. The polymer was filtered and dried under vacuum until constant weight.

Results are reported in Table 3, The characterization of the obtained polymers is reported in Table 4.

### EXAMPLE 25

### Ethylene/propylene copolymerization with C₂H₄(H₄Ind)₂ZrCl₂ in liquid propylene

In a 2 litre stainless steel autoclave, 480 g of propylene containing 1.2 mmols of H₂O were introduced and the temperature was raised to 50°C Thereafter, ethylene was fed until an overpressure of 7.5 atm was reached and a solution of 0.0047 mmols of C₂H₄(H₄Ind)₂ZrCl₂ and 9.5 mmols of AliBu₃ in 10 ml of toluene, precontacted for 8 minutes, was introduced. The ethylene overpressure was kept constant during the whole test, keeping under stirring at 52°C for 1 hour. After removal of unreacted monomers and drying, 150 g amorphous polymer were obtained (I.V. = 2.37 dl/g). The propylene content, determined by IR analysis, is 39% by mols.

### EXAMPLE 26

### Ethylene/butene copolymerization with C₂H₄(H₄Ind)₂ZrCl₂ in liquid butene

In a 1 liter stainless steel autoclave, 255 g of butene were introduced, the temperature was raised to 50°C and a solution obtained by mixing 0.16 ml of 4.34.10⁻³ M toluene solution of C₂H₄(H₄Ind)₂ZrCl₂ and 2.45 ml of 0.4 M toluene solution of AliBu₃ in 7.5 ml of toluene containing 1.12 mmols of H₂O, precontacting the two solutions for 5 minutes, was introduced. Thereafter ethylene was fed until an overpressure was reached of 4 atm. which was maintained constant, whilst stirring for 1 hour at 50°C. After removal of the unreacted monomer and drying, 7.90 g of amorphous polymer were obtained (I.V. = 2.96). The butene content, determined by ¹³C NMR analysis, is 29.1% by mols.

### EXAMPLE 27

### Ethylene/propylene/ethylidennorbornene terpolymerization with C₂H₄(H₄Ind)₂ZrCl₂ in liquid butene

The same procedure described in Example 25 was carried out, but adding 10 ml of 2-ethyliden-norbornene (ENB). The polymerization was carried out at 51°C for 45 minutes. After the removal of unreacted monomers and drying of the polymer, 76 g of amorphous terpolymer, containing 45.0% of propylene, 53.7% of ethylene and 1.3% of ENB (by mole) were obtained (I.V. = 1.62 dl/g).

### EXAMPLES 28-30

### Ethylene/propylene copolymerization with Me₂Si(Me₄Cp)₂ZrCl₂ in toluene

In a 250 ml glass autoclave, equipped with magnetic stirrer, thermostated to a constant polymerization temperature, 2.2 mmols of aluminium alkyl dissolved in 90 ml of toluene containing 0.55 mmol of water and 0.0022 mmol of the metallocene dissolved in 10 ml of anhydrous toluene were introduced under anhydrous nitrogen atmosphere. After 5 minutes in the absence of monomers, a mixture of ethylene and propylene in the desired ratio was fed under 5 absolute atmosphere pressure. The monomer mixture was continuously introduced in the autoclave under agitation during the whole test, and the gaseous mixture was continuously discharged at the rate of 0.5 liter/minute, while keeping the temperature constant. At the end the catalyst was deactivated by injecting 1 ml of methanol, the polymer solution was washed with 10 ml of 0.5 N HCL and the polymer was precipitated with methanol. The polymer was filtered and dried under vacuum until constant weight.

Results are reported in Table 5. The characterization of the obtained polymers is reported in Table 6.

### EXAMPLES 31-32

### Ethylene/butene copolymerization in liquid butene

In a 1 liter steel autoclave, the desired quantity of 1-butene was introduced. The temperature was raised to 50°C and 10 ml of toluene were introduced, in which the quantities indicated in Table 5 of metallocene, AliBu₃ and H₂0 have been dissolved. Ethylene was then fed until the desired overpressure, which was then maintained constant during the whole test, carried out whilst keeping stirred at 50°C for 1 hour. After removal of the unreacted monomers, the polymer was separated by washing with methanol and drying under vacuum.

Results are reported in Table 7. The characterization of the obtained polymers is reported in Table 8.

### EXAMPLE 33

### Ethylene/propylene/isoprene terpolymerization with Me₂Si(Me₄Cp)₂ZrCl₂ in toluene

In a 250 ml glass autoclave, equipped with magnetic stirrer, kept at the constant temperature of 50°C, 2.2 mmole of AliBu₃ dissolved in 90 cc of toluene containing 0.55 mmole of H₂O and 0,0022 mmols of dimethylsilandiyl-bis(tetramethyl cyclopentadienyl)zirconium dichloride dissolved in 10 ml of anhydrous toluene were introduced under anhydrous nitrogen. After 5 minutes in the absence of monomers, a mixture of ethylene and propylene in the desired ration was fed under a pressure of 5 absolute atmospheres and immediately after 5 ml of isoprene were added. The monomer mixture was continuously introduced in the autoclave whilst stirring during the whole test, continuously discharging the gaseous mixture at the rate of 0,5 l/minute. At the end the catalyst was deactivated by injecting 1 ml of methanol. The polymer solution was washed with 10 ml of 0.5N HCl and the polymer was precipitated with methanol. The polymer was filtered and dried under vacuum until constant weight, yielding 0.35 g of terpolymer, which contains (molar values) 6.6% propylene, 89.6% ethylene and 3.8% isoprene, as from the ¹H NMR analysis.

### EXAMPLE 34

### Ethylene/propylene/cis-1,4-hexadiene terpolymerization with Me₂Si(Me₄Cp)₂ZrCl₂ in toluene

In a 250 ml glass autoclave resistant to pressure, equipped with magnetic stirrer, kept at the constant temperature of 50°C, 2,2 mmol of AliBu₃ dissolved in 90 cc of toluene containing 0.55 mmol of H₂O and 0.0022 mmol of dimethylsilandiylbis(tetramethyl cyclopentadienyl)zirconium dichloride dissolved in 10 ml of anhydrous toluene were introduced under anhydrous nitrogen. After 5 minutes in the absence of monomer, an ethylene/propylene mixture in the desired ratio was fed under 5 absolute atmosphere pressure and, immediately after, 5 ml of cis-1,4-hexadiene were added. The monomer mixture was continuously introduced in the autoclave whilst stirring during the whole test, while continuously discharging the gaseous mixture at the rate of 0.5 l/min. At the end the catalyst was deactivated by injecting 1 ml of methanol, the polymer solution was washed with 10 ml of 0.5N HCl and the polymer was precipitated with methanol. The polymer was filtered and dried until constant weight, yielding 1.6 g of terpolymer containing (molar value) 6.33% propylene, 93.31% ethylene and 0.36% hexadiene, as from ¹H NMR analysis.

### EXAMPLE 35

### Propylene polymerization with (Me₅Cp)₂ZrMe₂ in toluene

Into a 250 ml glass autoclave equipped with magnetic stirrer and kept at the constant temperature of 20°C, 10 ml of toluene were introduced under nitrogen atmosphere. Then, 5.87 mg of (Me₅Cp)₂ZrMe₂ were dissolved in further 5 ml of toluene and to this solution 5 ml of toluene containing 2.23 g of the reaction product between AliBu₃ and water (molar ratio Al/H₂O=1.63) were added in order to have a molar ratio Al/Zr=1,000. After a 5 minutes aging, the solution was injected into the autoclave under propylene atmosphere. The polymerization was carried out at 20°C, under 4 atm of propylene, for 4 hours, yielding 8 ml of propylene oligomers.

### EXAMPLES 36-40

### Polymerization of 1,5-hexadiene with (Me₅Cp)₂ZrMe₂

### a) Preparation of the isobutyl alumoxanes

Into a 250 ml three-necked glass reactor, provided with magnetic stirrer, cooler, dropping funnel and nitrogen inlet tap, 29.32 g of triisobutyl aluminium (TIBAL) freshly distilled and free of hydrides were fed under nitrogen stream and then 84.85 g of anhydrous toluene were added.

In an evaporator connected with the nitrogen flow, the amount of water indicated in Table 9 was fed. The TIBAL solution was cooled to 0°C whilst stirring, and nitrogen was circulated by means of a membrane compressor for 150 minutes. Thereafter, a 20 ml sample of the solution (sample A) was taken.

By working in the same manner, the subsequently water additions indicated in Table 9 were carried out and the corresponding solution samples were taken (samples B-E).

### b) Polymerization of 1,5-hexadiene

Into a 100 ml glass test tube, 1.95 mg of (Me₅Cp)₂ZrMe₂ , 16.3 ml of toluene and 3.7 ml of the 1.35 M toluene solution of the reaction product between AliBu₃ and water with molar ratio between AliBu₃ and water equal to 3 (sample A) were introduced under nitrogen. After 5 minutes, 20 ml of 1,5-hexadiene were added and this was reacted for 4 hours at 20°C.

The same operations were then repeated using reaction products between AliBu₃ and water in different molar ratios (samples B-E).

The yields and characterizations of the polymers obtained are reported in Table 9.

### EXAMPLE 41

### Ethylene/2-norbornene copolymerization with C₂H₄(H₄Ind)₂ZrCl₂ in toluene/hexane

Into a 100 ml glass Schlenk tube equipped with magnetic stirrer, 70 ml of toluene and 1.80 g of TIBAL were introduced. After 5 minutes, 0.0816 ml of water were added (molar ratio Al/H₂O=2). The solution was left for 20 minutes under stirring. Then, 4.71 g of 2-norbornene in 25 ml of hexane were injected into the tube by means of a syringe. Then, the solution contained into the tube was metered, under ethylene flow, into a 250 ml glass autoclave equipped with magnetic stirrer, which had been flushed with nitrogen and then with ethylene. After 5 minutes, the nitrogen was removed and the autoclave was saturated with 1 ata of ethylene. Parallel to this, 3.87 mg of C₂H₄(H₄Ind)₂ZrCl₂ were dissolved in 5 ml of toluene. This solution was then metered into the autoclave (molar ratio Al/Zr=1,000). The autoclave was kept at 22°C for 1 hour under stirring. The contents of the autoclave were then discharged, filtered, and the solid was treated with a mixture of two parts of ethanol and 1 part of hydrocloric acid during 1 hour. The solid was then filtered off, washed with water until pH neutral and dried at 50°C under vacuum for 8 hours. 3.2 g of an amorphous polymer were recovered.

### EXAMPLE 42

### Ethylene/2-norbornene copolymerization with C₂H₄(H₄Ind)₂ZrCl₂ in toluene/hexane

The same procedure described in Example 41 was carried out, except that 62.5 ml of toluene and 1.80 g of TIBAL were introduced into the Schlenk tube and that, afterwards, 7.06 g of 2-norbornene in 37.5 ml of hexane were injected into the tube. 2.6 g of amorphous polymer were recovered. The glass transition temperature (T_{g}) is 59.6°C.

**TABLE 1**

| Ethylene polymerization with Me₂Si(Me₄Cp)₂ZrCl₂/AliBu₃/H₂O in propane | | | | | | | |
|---|---|---|---|---|---|---|---|
| Example | Zr (µmol) | H₂O (mmol) | Al/O (mol) | Al/Zr (mol) | yield (g) | activity (Kg_{PE}/g_{Zr}/h) | I.V. (dl/g) |
| 3 | 2.2 | 2.27 | 1.5 | 1,566 | 75 | 189.4 | 2.54 |
| 4 | 2.2 | 1.13 | 3.0 | 1,566 | 68 | 171.7 | 1.17 |
| 5 | 2.2 | 0.45 | 7.6 | 1,566 | 72 | 181.8 | 1.21 |
| 6 | 2.2 | 0.30 | 11.3 | 1,566 | 5 | 12.6 | n.d. |
| I.V. = intrinsic viscosity | | | | | | | |

**TABLE 2**

| Ethylene polymerization with Me₂Si(Me₄Cp)₂ZrCl₂/AliBu₃/H₂O in hexane | | | | | | | |
|---|---|---|---|---|---|---|---|
| Example | Zr (µmol) | H₂O (mmol) | Al/O (mol) | Al/Zr (mol) | yield (g) | activity (Kg_{PE}/g_{Zr}/h) | I.V. (dl/g) |
| 10 | 0.21 | - | - | 8,500 | 3.3 | 170 | 3.64 |
| 11 | 0.22 | 0.18 | 10 | 8,200 | 21.1 | 1,045 | 3.95 |
| 12 | 0.22 | 0.36 | 5 | 8,200 | 22.2 | 1,112 | 4.14 |
| 13 | 0.25 | 0.90 | 2 | 7,300 | 24.5 | 1,048 | 3.62 |
| 14 | 0.21 | 1.80 | 1 | 8,500 | 18.0 | 928 | 3.33 |
| COMP.A | 0.10 | 0.89 | 1 | 8,000 | 4.0 | 408 | 3.10 |
| I.V. = intrinsic viscosity | | | | | | | |

**TABLE 3**

| Ethylene/propylene copolymerization - synthesis | | | | | | |
|---|---|---|---|---|---|---|
| Example | Catalyst | Al/O (mol) | Tₚ (°C) | feeding C₃/C₂ (mol) | tₚ (min) | activity (Kgₚ/g_{Zr}/h) |
| 18 | Me₂Si(Me₄Cp)₂ZrCl₂/AliBu₃/H₂O | 4 | 50 | 7 | 60 | 16.5 |
| 19 | Me₂Si(Me₄Cp)₂ZrCl₂/AliBu₃/H₂O | 4 | 60 | 7 | 90 | 17.5 |
| 20 | Me₂Si(Me₄Cp)₂ZrCl₂/AliBu₃/H₂O | 4 | 50 | 10 | 135 | 11.1 |
| 21 | Me₂Si(Me₄Cp)₂ZrCl₂/AliBu₃/H₂O | 4 | 50 | 15 | 120 | 7.3 |
| 22 | Me₂Si(Ind)₂ZrCl₂/AliBu₃/H₂O | 4 | 50 | 2 | 90 | 16.0 |
| 23 | C₂H₄(H₄Ind)₂ZrCl₂/AliBu₃/H₂O | 4 | 50 | 2 | 60 | 30.5 |
| 24 | C₂H₄(H₄Ind)₂ZrCl₂/AliEs₃/H₂O | 4 | 50 | 2 | 120 | 11.5 |
| COMP.B | C₂H₄(H₄Ind)₂ZrCl₂/AlEt₃/H₂O | 4 | 50 | 2 | 120 | 1.6 |
| Me=methyl, Me₄Cp=2,3,4,5-tetramethylcyclopentadienyl, Ind=indenyl, H₄Ind=4,5,6,7-tetrahydroindenyl | | | | | | |

**TABLE 4**

| Ethylene/propylene copolymerization - characterization | | | | |
|---|---|---|---|---|
| Example | % C₃ - I.R. (mol) | I.V. (dl/g) | Tₘ (°C) | ΔH_{f} (J/g) |
| 18 | 16.5 | 1.74 | 64.4 | 6.3 |
| 19 | 22.2 | 1.28 | amorphous | - |
| 20 | 18.0 | 1.58 | 70.5 | 15.5 |
| 21 | 33.0 | 1.02 | amorphous | - |
| 22 | 25.0 | 1.0 | amorphous | - |
| 23 | 29.5 | 1.65 | amorphous | - |
| 24 | 30.3 | 1.93 | 44.7 | 2.5 |
| COMP.B | 16.0 | 0.50 | 39.0 | 9.2 |
| I.V. = inherent viscosity | | | | |

**TABLE 5**

| Ethylene/propylene copolymerization - synthesis | | | | | | |
|---|---|---|---|---|---|---|
| Example | Catalyst | Al/O (mol) | Tₚ (°C) | feeding C₃/C₂ (mol) | tₚ (min) | Activity (Kgₚ/g_{Zr}/h) |
| 28 | Me₂Si(Me₄Cp)₂ZrCl₂/AliBu₃/H₂O | 4 | 20 | 1 | 15 | 44.0 |
| 29 | Me₂Si(Me₄Cp)₂ZrCl₂/AliBu₃/H₂O | 4 | 50 | 1 | 15 | 34.6 |
| 30 | Me₂Si(Me₄Cp)₂ZrCl₂/AliBu₃/H₂O | 4 | 50 | 5 | 90 | 12.5 |
| Me=methyl, Me₄Cp=2,3,4,5-tetramethylcyclopentadienyl | | | | | | |

**TABLE 6**

| Ethylene/propylene copolymerization - characterization | | | | |
|---|---|---|---|---|
| Example | % C₃ - ¹³C NMR (mol) | I.V. (dl/g) | Tₘ (°C) | ΔH_{f} (J/g) |
| 28 | 2.38 | 2.92 | 115.6 | 130.8 |
| 29 | 2.50 | n.d. | 114.7 | 82.2 |
| 30 | 6.70 | 2.11 | 101.3 | 55.3 |
| I.V. = inherent viscosity | | | | |

**TABLE 7**

| Ethylene/butene copolymerization - synthesis | | | | | | | |
|---|---|---|---|---|---|---|---|
| Example | Catalyst | Al/O (mol) | C₄ (g) | P_{C2} (atm) | Zr (mmol.10⁴) | Al (mmol) | activity (Kgₚ/g_{Zr}/h) |
| 31 | Me₂Si(Me₄Cp)₂ZrCl₂/AliBu₃/H₂O | 6 | 260 | 4 | 6.51 | 2.33 | 860.5 |
| 32 | C₂H₄(H₄Ind)₂ZrCl₂/AliBu₃/H₂O | 6 | 260 | 20 | 4.74 | 2.48 | 513.5 |
| Me=methyl, Me₄Cp=2,3,4,5-tetramethylcyclopentadienyl, H₄Ind=4,5,6,7-tetrahydroindenyl | | | | | | | |

**TABLE 8**

| Ethylene/butene copolymerization - characterization | | | | | |
|---|---|---|---|---|---|
| Example | % C₄ - ¹³C NMR (mol) | I.V. (dl/g) | Tₘ (°C) | ΔH_{f} (J/g) | density (g/cc) |
| 31 | 6.4 | 3.46 | 89.9 | 36.8 | 0.899 |
| 32 | n.d. | n.d. | 66.0 | 19.0 | 0.885 |
| I.V. = inherent viscosity | | | | | |

**TABLE 9**

| 1,5-hexadiene polymerization - characterization | | | | | | | | | | |
|---|---|---|---|---|---|---|---|---|---|---|
| Example | Sample | H₂O | | Al/H₂O (mol) | diene | yield (g) | activity (g_{POL}/g_{Zr}) | Tₘ (°C) | ΔH_{f} (J/g) | I.V. (dl/g) |
| | | ml | mmol | | | | | | | |
| 36 | A | 0.912 | 50.65 | 3 | 20 | 0.45 | 980 | 179.6 | 42.1 | 0.40 |
| 37 | B | 0.255 | 14.15 | 2.25 | 20 | 0.85 | 1,860 | 178.3 | 40.3 | 0.45 |
| 38 | C | 0.103 | 5.7 | 2 | 20 | 1.36 | 2,980 | 177.7 | 42.2 | 0.41 |
| 39 | D | 0.234 | 13 | 1.5 | 20 | 7.07 | 15,500 | 177.0 | 43.1 | 0.35 |
| 40 | E | 0.165 | 9.13 | 1.2 | 20 | 8.75 | 19,200 | 175.4 | 41.9 | n.d. |
| I.V. = inherent viscosity | | | | | | | | | | |

## Claims

1. A catalyst for the polymerization of olefins consisting essentially of the product obtainable by contacting the following components:
(A) a cyclopentadienyl compound of the formula (I)
(C₅R¹ₓ₋ₘH₅₋ₓ)R²ₘ(C₅R¹_{y-m}H_{5-y})ₙMQ₃₋ₙ (I)
wherein M is a metal selected from the group consisting of Ti, Zr and Hf; C₅R¹ₓ₋ₘH₅₋ₓ and C₅R¹_{y-m}H_{5-y} are equally or differently substituted cyclopentadienyl rings; the substituents R¹, same or different from each other, are alkyl, alkenyl, aryl, alkylaryl or arylalkyl radicals containing from 1 to 20 carbon atoms, which may also contain Si or Ge atoms, or groups Si(CH₃)₃, or two or four substituents R¹ of the same cyclopentadienyl group can form one or two rings having from 4 to 6 carbon atoms; R² is a bridging group which links the two cyclopentadienyl rings and is selected among CR³₂, C₂R³₄, SiR³₂, Si₂R³₄, GeR³₄, Ge₂R³₄, R³₂SiCR³₂, NR¹ or PR¹, wherein the substituents R³, same or different from each other, are R¹ or hydrogen, or two or four substituents R³ can form one or two rings having from 3 to 6 carbon atoms; the substituents Q, same or different from each other, are hydrogen, halogen atoms, OH, SH, R¹, OR¹, SR¹, NR¹₂ or PR¹₂; m can be O or 1; n can be O or 1, being 1 when m=1; x is an integer comprised between m+1 and 5, preferably between (m+2) and 5; y is an integer comprised between m and 5;
(B) an organometallic aluminium compound of the formula (II):
AlR⁴_{3-z}H_{z} (II)
wherein the substituents R⁴, same or different from each other, are alkyl, alkenyl or alkylaryl radicals containing from 1 to 10 carbon atoms, which may also contain Si or Ge atoms, at least one of the substituents R⁴ being different from a straight alkyl group; z can be 0 or 1; and
(C) water;
the molar ratio between the organometallic aluminium compound and water being in the range of from 1:1 to 100:1, with the proviso that at least part of the aluminium is present in a form different from an alumoxane compound of formula (III): 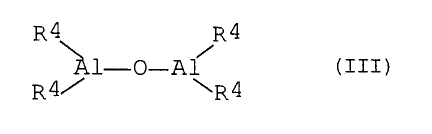 wherein the substituents R⁴, same or different from each other, are as defined above.

2. The catalyst according to claim 1, wherein the molar ratio between the aluminium of the organometallic aluminium compound and the metal M of the cyclopentadienyl compound is in the range of from about 100 to 10000.

3. The catalyst according to claim 1, wherein the metal M in the cyclopentadienyl compound of the formula (I) is zirconium.

4. The catalyst according to claim 1, wherein in the cyclopentadienyl compound of the formula (I), m is=0, and the C₅R¹ₓ₋ₘH₅₋ₓ and C₅R¹_{y-m}H_{5-y} groups are tetramethyl-cyclopentadienyl, pentamethyl-cyclopentadienyl, indenyl or 4,5,6,7-tetrahydroindenyl groups.

5. The catalyst according to claim 1, wherein in the cyclopentadienyl compound of the formula (I), m is=1, the C₅R¹ₓ₋ₘH₅₋ₓ and C₅R¹_{y-m}H_{5-y} groups are selected from the group consisting of tetramethyl-cyclopentadienyl, indenyl, 2-methyl-indenyl, 4,7-dimethyl-indenyl, 2,4,7-trimethyl-indenyl, 4,5,6,7-tetrahydroindenyl, 2-methyl-4,5,6,7-tetrahydroindenyl, 4,7-dimethyl-4,5,6,7-tetrahydroindenyl, 2,4,7-trimethyl-4,5,6,7-tetrahydroindenyl and fluorenyl groups, and R² is a divalent (CH₃)₂Si or C₂H₄ group.

6. The catalyst according to claim 1, wherein in the cyclopentadienyl compound of the formula (I), the substituents Q are chlorine atoms or methyl groups.

7. The catalyst according to claim 1, wherein the organometallic aluminium compound is a triisoalkyl aluminium.

8. The catalyst according to claim 7, wherein the triisoalkyl aluminium is triisobutyl aluminium.

9. A catalyst for the polymerization of olefins consisting essentially of the product obtainable by contacting the following components:
(A) a cyclopentadienyl compound of the formula (I):
(C₅R¹ₓ₋ₘH₅₋ₓ)R²ₘ(C₅R¹_{y-m}H_{5-y})ₙMQ₃₋ₙ (I)
wherein M, C₅R¹ₓ₋ₘH₅₋ₓ, C₅R¹_{y-m}H_{5-y}, R¹, R² Q, m, n, x, y are as defined in claim 1; and
(B) the reaction product between water and an organometallic aluminium compound of the formula (II):
AlR⁴_{3-z}H₂ (II)
wherein R⁴ and z are as defined in claim 1, at least one of the substituents R⁴ being different from a straight alkyl group, the molar ratio between the organometallic aluminium compound and water being in the range of from 1:1 to 100:1;
with the proviso that at least part of the aluminium is present in a form different from an alumoxane compound of formula (III): 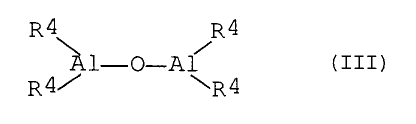 wherein the substituents R⁴, same or different from each other, are as defined in claim 1.

10. A process for the preparation of an ethylene homopolymer, which comprises the polymerization reaction of ethylene in the presence of a catalyst according to claim 1.

11. The process according to claim 10, wherein the cyclopentadienyl compound is selected from the group consisting of dimethylsilandiyl-bis(2,3,4,5-tetramethylcyclopentadienyl) zirconium dichloride and rac-ethylene-bis(4,7-dimethyl-1-indenyl)zirconium dichloride.

12. A process for the preparation of a copolymer of ethylene with one or more comonomers selected from the group consisting of alpha-olefins of the formula CH₂=CHR, wherein R is a straight, branched or cyclic alkyl radical containing from 1 to 20 carbon atoms, and cycloolefins, optionally with one or more polyene monomers, said copolymer containing from 80% to 99% by mols of units deriving from ethylene, and from 1% to 20% of units deriving from alpha-olefin, cycloolofin and/or polyene monomers, said process comprising the polymerization reaction of a mixture of ethylene, one or more of said alpha-olefins and/or cycloolefins and, optionally, one or more polyenes, in the presence of a catalyst according to claim 1.

13. The process according to claim 12, wherein the comonomers are selected from the group consisting of 1-butene, 1-hexene and 1-octene.

14. A process for the preparation of an elastomeric copolymer of ethylene with one or more alpha-olefin comonomers of the formula CH₂=CHR, wherein R is an alkyl radical having from 1 to 10 carbon atoms and, optionally, with one or more polyene monomers, said copolymer containing from 15% to 85% by mols of units deriving from ethylene, and from 85% to 15% of units deriving from alpha-olefin and polyene monomers, said process comprising the polymerization reaction of a mixture of ethylene, one or more of said alpha-olefins and, optionally, one or more polyenes, in the presence of a catalyst according to claim 1.

15. The process according to claim 14, wherein the cyclopentadienyl compound is ethylene-bis(4,5,6,7-tetrahydroindenyl)zirconium dichloride.

16. The process according to claim 14, wherein the comonomer or comonomers are selected from the group consisting of propylene, 1-butene and 4-methyl-1-pentene.

17. The process according to claim 16, wherein the copolymer contain from 0% to 5% by weight of units deriving from one or more dienes.

18. A process for the preparation of a cycloolefin polymer, comprising the polymerization reaction of at least one monomer selected from monocyclic and polycyclic olefins, optionally with one or more linear olefin monomers, in the presence of a catalyst according to claim 1.

## Patentansprüche

1. Katalysator für die Polymerisation von Olefinen, bestehend im wesentlichen aus dem Produkt, erhältlich durch Inkontaktbringen der nachstehenden Komponenten:
(A) einer Cyclopentadienylverbindung der Formel (I):
(C₅R¹ₓ₋ₘH₅₋ₓ)R²ₘ(C₅R¹_{y-m}H_{5-y})ₙMQ₃₋ₙ (I),
worin M ein Metall, ausgewählt aus der Gruppe, bestehend aus Ti, Zr oder Hf, darstellt; C₅R¹ₓ₋ₘH₅₋ₓ und C₅R¹_{y-m}H_{5-y} gleich oder verschieden substituierte Cyclopentadienylringe darstellen; die Substituenten R¹, gleich oder verschieden voneinander, 1 bis 20 Kohlenstoffatome enthaltende Alkyl-, Alkenyl-, Aryl-, Alkylaryl- oder Arylalkylreste, die auch Si- oder Ge-Atome enthalten können, oder Gruppen Si(CH₃)₃ darstellen oder zwei oder vier Substituenten R¹ von ein und derselben Cyclopentadienylgruppe einen oder zwei Ringe mit 4 bis 6 Kohlenstoffatomen bilden können; R² eine Brückengruppe, die die zwei Cyclopentadienylringe verbindet, darstellt und ausgewählt ist aus CR³₂, C₂R³₄, SiR³₂, Si₂R³₄, GeR³₂, Ge₂R³₄, R³₂SiCR³₂, NR¹ oder PR¹, wobei die Substituenten R³, gleich oder verschieden voneinander, R¹ oder Wasserstoff darstellen, oder zwei oder vier Substituenten R³ einen oder zwei Ringe mit 3 bis 6 Kohlenstoffatomen bilden können; wobei die Substituenten Q, gleich oder verschieden voneinander, Wasserstoff, Halogenatome, OH, SH, R¹, OR¹, SR¹, NR¹₂ oder PR¹₂ darstellen; m 0 oder 1 sein kann; n 0 oder 1 sein kann, wobei es 1 ist, wenn m = 1; x eine ganze Zahl, umfaßt zwischen m+1 und 5, vorzugsweise zwischen (m+2) und 5, ist; y eine ganze Zahl, umfaßt zwischen m und 5 ist;
(B) eine organometallische Aluminiumverbindung der Formel (II):
AlR⁴_{3-z}H_{z} (II),
worin die Substituenten R⁴, gleich oder verschieden voneinander, 1 bis 10 Kohlenstoffatome enthaltende Alkyl-, Alkenyl- oder Alkylarylreste, die auch Si- oder Ge-Atome enthalten können, wobei mindestens einer der Substituenten R⁴ keine lineare Alkylgruppe darstellt; z 0 oder 1 sein kann; und
(C) Wasser;
wobei das Molverhältnis zwischen der organometallischen Aluminiumverbindung und Wasser im Bereich von 1:1 bis 100:1 liegt,
mit der Maßgabe, daß mindestens ein Teil des Aluminiums in einer Form vorliegt, die sich von einer Alumoxanverbindung der Formel (III) unterscheidet: 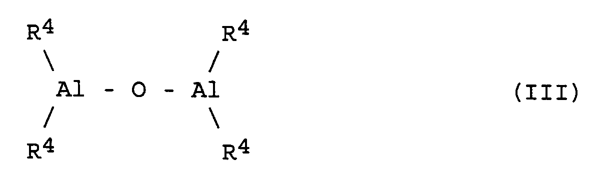 wobei die Substituenten R⁴, gleich oder verschieden voneinander, wie vorstehend definiert sind.

2. Katalysator nach Anspruch 1, wobei das Molverhältnis zwischen dem Aluminium der organometallischen Aluminiumverbindung und dem Metall M der Cyclopentadienylverbindung im Bereich von etwa 100 bis 10000 liegt.

3. Katalysator nach Anspruch 1, wobei das Metall M in der Cyclopentadienylverbindung der Formel (I) Zirconium ist.

4. Katalysator nach Anspruch 1, wobei in der Cyclopentadienylverbindung der Formel (I) m = 0 ist und die Gruppen C₅R¹ₓ₋ₘH₅₋ₓ und C₅R¹_{y-m}H_{5-y} Tetramethylcyclopentadienyl-, Pentamethylcyclopentadienyl-, Indenyl- oder 4,5,6,7-Tetrahydroindenylgruppen darstellen.

5. Katalysator nach Anspruch 1, wobei in der Cyclopentadienylverbindung der Formel (I) m = 1 ist, die Gruppen C₅R¹ₓ₋ₘH₅₋ₓ und C₅R¹_{y-m}H_{5-y} ausgewählt sind aus der Gruppe, bestehend aus Tetramethylcyclopentadienyl-, Indenyl-, 2-Methylindenyl-, 4,7-Dimethylindenyl-, 2,4,7-Trimethylindenyl, 4,5,6,7-Tetrahydroindenyl-, 2-Methyl-4,5,6,7-tetrahydroindenyl-, 4,7-Dimethyl-4,5,6,7-tetrahydroindenyl-, 2,4,7-Trimethyl-4,5,6,7-tetrahydroindenyl- und Fluorenylgruppen darstellen und R² eine zweiwertige Gruppe (CH₃)₂Si oder C₂H₄ darstellt.

6. Katalysator nach Anspruch 1, wobei in der Cyclopentadienylverbindung der Formel (I) die Substituenten Q Chloratome oder Methylgruppen darstellen.

7. Katalysator nach Anspruch 1, wobei die organometallische Aluminiumverbindung ein Triisoalkylaluminium darstellt.

8. Katalysator nach Anspruch 7, wobei das Triisoalkylaluminium Triisobutylaluminium darstellt.

9. Katalysator für die Polymerisation von Olefinen, bestehend im wesentlichen aus dem Produkt, erhältlich durch Inkontaktbringen der nachstehenden Komponenten:
(A) einer Cyclopentadienylverbindung der Formel (I):
(C₅R¹ₓ₋ₘH₅₋ₓ)R²ₘ(C₅R¹_{y-m}H_{5-y})ₙMQ₃₋ₙ (I),
worin M, C₅R¹ₓ₋ₘH₅₋ₓ, C₅R¹_{y-m}H_{5-y}, R¹, R², Q, m, n, x, y wie in Anspruch 1 definiert sind; und
(B) das Reaktionsprodukt zwischen Wasser und einer organometallischen Aluminiumverbindung der Formel (II):
AlR⁴_{3-z}H_{z} (II),
worin die R⁴ und z wie in Anspruch 1 definiert sind, mindestens einer der Substituenten R⁴ keine lineare Alkylgruppe darstellt, wobei das Molverhältnis zwischen der organometallischen Aluminiumverbindung und Wasser im Bereich von 1:1 bis 100:1 liegt,
mit der Maßgabe, daß mindestens ein Teil des Aluminiums in einer Form vorliegt, die sich von einer Alumoxanverbindung der Formel (III) unterscheidet: 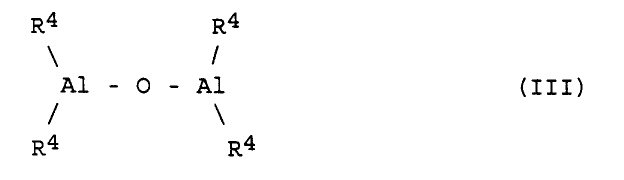 wobei die Substituenten R⁴, gleich oder verschieden voneinander, wie in Anspruch 1 definiert sind.

10. Verfahren zur Herstellung eines Ethylenhomopolymers, das die Polymerisationsreaktion von Ethylen in Anwesenheit eines Katalysators nach Anspruch 1 umfaßt.

11. Verfahren nach Anspruch 10, wobei die Cyclopentadienylverbindung ausgewählt ist aus der Gruppe, bestehend aus Dimethylsilandiyl-bis(2,3,4,5-tetramethylcyclopentadienyl)zirconiumdichlorid und rac-Ethylen-bis(4,7-dimethyl-1-indenyl)zirconiumdichlorid.

12. Verfahren zur Herstellung eines Copolymers von Ethylen mit einem oder mehreren Comonomeren, ausgewählt aus der Gruppe, bestehend aus α-Olefinen der Formel CH₂=CHR, worin R einen linearen, verzweigten oder cyclischen Alkylrest mit 1 bis 20 Kohlenstoffatomen darstellt, und Cycloolefinen, gegebenenfalls mit einem oder mehreren Polyenmonomeren, wobei das Copolymer 80 bis 99 Mol-% Einheiten, abgeleitet von Ethylen, und 1 bis 20 % Einheiten, abgeleitet von α-Olefin, Cycloolefin und/oder Polyenmonomeren, enthält, wobei das Verfahren die Polymerisationsreaktion eines Gemisches von Ethylen, einem oder mehreren der α-Olefine und/oder Cycloolefine und gegebenenfalls einem oder mehreren Polyenen in Anwesenheit eines Katalysators nach Anspruch 1 umfaßt.

13. Verfahren nach Anspruch 12, wobei die Comonomere ausgewählt sind aus der Gruppe, bestehend aus 1-Buten, 1-Hexen und 1-Octen.

14. Verfahren zur Herstellung eines elastomeren Copolymers von Ethylen mit einem oder mehreren α-Olefin-Comonomeren der Formel CH₂=CHR, worin R einen Alkylrest mit 1 bis 10 Kohlenstoffatomen bedeutet und gegebenenfalls mit einem oder mehreren Polyenmonomeren, wobei das Copolymer 15 bis 85 Mol-% Einheiten, abgeleitet von Ethylen, und 85 bis 15 % Einheiten, abgeleitet von α-Olefin und Polyenmonomeren, enthält, wobei das Verfahren die Polymerisationareaktion eines Gemisches von Ethylen, einem oder mehreren der α-Olefine und gegebenenfalls einem oder mehreren Polyenen in Anwesenheit eines Katalysators nach Anspruch 1 umfaßt.

15. Verfahren nach Anspruch 14, wobei die Cyclopentadienylverbindung Ethylen-bis(4,5,6,7-tetrahydroindenyl)zirconiumdichlorid darstellt.

16. Verfahren nach Anspruch 14, wobei das Comonomer oder die Comonomeren ausgewählt sind aus der Gruppe, bestehend aus Propylen, 1-Buten und 4-Methyl-1-penten.

17. Verfahren nach Anspruch 16, wobei das Copolymer 0 bis 5 Gew.-% Einheiten, abgeleitet von einem oder mehreren Dienen, enthält.

18. Verfahren zur Herstellung eines Cycloolefin-Polymers, umfassend die Polymerisationsreaktion von mindestens einem Monomer, ausgewählt aus monocyclischen und polycyclischen Olefinen, gegebenenfalls mit einem oder mehreren linearen Olefinmonomeren, in Anwesenheit eines Katalysators nach Anspruch 1.

## Revendications

1. Un catalyseur de la polymérisation d'oléfines consistant essentiellement en le produit susceptible d'être obtenu par mise en contact des composants suivants :
(A) Un dérivé cyclopentadiénylique de formule (I) :
(C₅R¹ₓ₋ₘH₅₋ₓ)R²ₘ(C₅R¹_{y-m}H_{5-y})ₙMQ₃₋ₙ (I)
dans laquelle M est un métal choisi dans le groupe consistant en Ti, Zr et Hf ; C₅R¹ₓ₋ₘH₅₋ₓ et C₅R¹_{y-m}H_{5-y} sont des cycles cyclopentadiényles substitués identiquement ou différemment les substituants R¹, identiques ou différents les uns des autres, sont des radicaux alkyle, alkényle, aryle, alkylaryle ou arylalkyle comportant de 1 à 20 atomes de carbone, qui peuvent également renfermer des atomes de Si ou de Ge, ou bien des groupes Si(CH₃)₃, ou bien deux ou quatre substituants R¹ du même groupe cyclopentadiényle peuvent former un ou deux cycles comportant 4 à 6 atomes de carbone; R² est un groupe de pontage qui relie deux cycles cyclopentadiényles et qui est choisi parmi CR³₂, C₂R³₄, SiR³₂, Si₂R³₄, GeR³₂, Ge₂R³₄, R³₂SiCR³₂, NR¹ ou PR¹, où les substituants R³, identiques ou différents les uns des autres, sont R¹ ou l'hydrogène, ou bien deux ou quatre substituants R³ peuvent former un ou deux cycles comportant 3 à 6 atomes de carbone ; les substituants Q, identiques ou différents les uns des autres, sont des atomes d'hydrogène, d'halogène, OH, SH, R¹, OR¹, SR¹, NR¹₂, ou PR¹₂ ; m peut être égal à 0 ou 1 ; n peut être égal à 0 ou 1 ; et il est 1 quand m = 1 ; x est un nombre entier compris entre m+1 et 5, de préférence compris entre (m+2) et 5 ; et y est un entier compris entre m et 5 ;
(B) un dérivé organométallique d'aluminium de formule (II) :
AlR⁴_{3-z}H_{z} (II)
dans laquelle les substituants R⁴, identiques ou différents les uns des autres, sont des radicaux alkyle, alkényle ou alkylaryle comportant de 1 à 10 atomes de carbone, qui peuvent également renfermer des atomes de Si ou de Ge, l'un au moins des substituants R⁴ étant autre qu'un groupe alkyle linéaire ; z peut être égal à 0 ou 1 ; et
(C) de l'eau ;
le rapport molaire entre le dérivé organométallique de l'aluminium et l'eau étant dans la fourchette de 1/1 à 100/1, avec cette condition qu'au moins une partie de l'aluminium est présent sous une forme autre qu'un dérivé alumoxane de formule (III) : 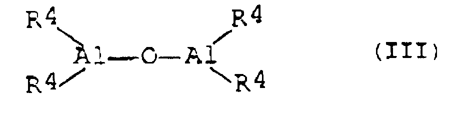 où les substituants R⁴, identiques ou différents les uns des autres, sont tels que définis ci-dessus.

2. Le catalyseur selon la revendication 1, dans lequel le rapport molaire entre l'aluminium du dérivé organométallique de l'aluminium et le métal M du dérivé cyclopentadiénylique est dans la fourchette d'environ 100 à 1000.

3. Le catalyseur selon la revendication 1, dans lequel le métal M du dérivé cyclopentadiényle de formule (I) est le zirconium.

4. Le catalyseur selon la revendication 1, dans lequel dans le dérivé cyclopentadiénylique de formule (I), m vaut 0 et les groupes C₅R¹ₓ₋ₘH₅₋ₓ et C₅R¹_{y-m}H_{5-y} sont des groupes tétraméthylcyclopentadiényle, pentaméthylcyclopentadiényle, indényle ou 4,5,6,7-tétrahydroindényle.

5. Le catalyseur selon la revendication 1, dans lequel, dans le composé cyclopentadiényle de formule (I), m est égal à 1 et les groupes C₅R¹ₓ₋ₘH₅₋ₓ et C₅R¹_{y-m}H_{5-y} sont choisis dans le groupe consistant en tétraméthylcyclopentadiényle, indényle, 2-méthylindényle, 4,7-diméthylindényle, 2,4,7-triméthylindényle, 4,5,6,7-tétrahydroindényle, 2-méthyl-4,5,6,7-tétrahydroindényle, 4,7-diméthyl-4,5,6,7-tétrahydroindényle, 2,4,7-triméthyl-4,5,6,7-tétrahydroindényle et fluorényle, et R² est un groupe (CH₃)₂Si ou bien un groupe C₂H₄ divalent.

6. Le catalyseur selon la revendication 1, dans lequel, dans le dérivé cyclopentadiénylique de formule (I), les constituants Q sont des atomes de chlore ou des groupes méthyles.

7. Le catalyseur selon la revendication 1, dans lequel le dérivé organométallique de l'aluminium est un triisoalkylaluminium.

8. Le catalyseur selon la revendication 7, dans lequel le triisoalkylaluminium est le triisobutylaluminium.

9. Un catalyseur de polymérisation d'oléfines consistant essentiellement en le produit susceptible d'être obtenu par mise en contact des composants suivants:
(A) Un dérivé cyclopentadiénylique de formule (I) :
(C₅R¹ₓ₋ₘH₅₋ₓ)R²ₘ(C₅R¹_{y-m}H_{5-y})ₙMQ₃₋ₙ (I)
dans laquelle M, C₅R¹ₓ₋ₘH_{5-x,} C₅R¹_{y-m}H_{5-y}, R¹, R², Q, m, n, x, y sont tels que définis dans la revendication 1 ; et
(B) le produit de la réaction entre l'eau et un dérivé organométallique de l'aluminium de formule (II) :
AlR⁴_{3-z}H_{z} (II)
dans laquelle R⁴ et z sont tels que définis dans la revendication 1, l'un au moins des substituants R⁴ étant autre qu'un groupe alkyle linéaire, le rapport molaire entre le dérivé organométallique de l'aluminium et l'eau étant dans la fourchette de 1/1 à 100/1 ;
avec cette condition qu'une partie au moins de l'aluminium est présente sous une forme autre qu'un dérivé alumoxane de formule (III) : 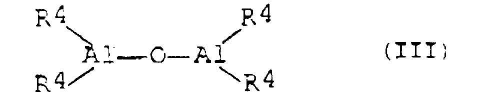 dans laquelle les substituants R⁴, identiques ou différents les uns des autres, sont tels que définis dans la revendication 1.

10. Un procédé de préparation d'un homopolymère de l'éthylène qui comprend la réaction de polymérisation de l'éthylène en présence d'un catalyseur selon la revendication 1.

11. Le procédé selon la revendication 10, dans lequel le dérivé cyclopentadiénylique est choisi dans le groupe consistant en dichlorure de diméthylsilandiyl-bis(2,3,4,5-tétraméthylcyclopentadiényl)zirconium et le dichlorure de rac-éthylène-bis(4,7-diméthyl-1-indényl)zirconium.

12. Un procédé de préparation d'un copolymère d'éthylène avec un ou plusieurs comonomères choisis dans le groupe consistant en alpha-oléfines de formule CH₂=CHR, où R est un radical alkyle linéaire, ramifié ou cyclique, comportant de 1 à 20 atomes de carbone et des cyclooléfines, avec éventuellement un ou plusieurs monomères polyènes, ledit copolymère contenant de 80 % à 99 % molaires de motifs dérivant de l'éthylène et de 1 % à 20 % de motifs dérivant d'alpha-oléfine, de cyclo-oléfine et/ou de monomères polyènes, ledit procédé comprenant la réaction de polymérisation d'un mélange d'éthylène, d'une ou plusieurs desdites alpha-oléfines et/ou cyclooléfines et, le cas échéant, d'un ou plusieurs polyènes, en présence d'un catalyseur selon la revendication 1.

13. Le procédé selon la revendication 12, dans lequel les comonomères sont choisis dans le groupe consistant en 1-butène, 1-hexène et 1-octène.

14. Un procédé de préparation d'un copolymère élastomère d'éthylène avec un ou plusieurs comonomères alpha-oléfiniques de formule CH₂=CHR où R est un radical alkyle comportant de 1 à 10 atomes de carbone et, le cas échéant, avec un ou plusieurs monomères polyéniques, ledit copolymère contenant de 15 % à 85 % molaires de motifs dérivant de l'éthylène et 85 à 15 % de motifs dérivant de l'alpha-oléfine et de polyène monomères, ledit procédé comprenant la réaction de polymérisation d'un mélange d'éthylène, une ou plusieurs desdites alpha-oléfines et, le cas échéant, un ou plusieurs polyènes, en présence d'un catalyseur selon la revendication 1.

15. Le procédé selon la revendication 14, dans lequel le dérivé cyclopentadiénylique est le dichlorure d'éthylène-bis(4,5,6,7-tétrahydroindényl)zirconium.

16. Le procédé selon la revendication 14, dans lequel on choisit le comonomère ou les comonomères dans le groupe consistant en propylène, 1-butène et 4-méthyl-1-pentène.

17. Le procédé selon la revendication 16, dans lequel le copolymère contient de 0 % à 5 % en poids de motifs dérivant de un ou plusieurs diènes.

18. Un procédé de préparation d'un polymère cyclooléfinique comprenant la réaction de polymérisation d'au moins un monomère choisi parmi les oléfines monocycliques et polycycliques, éventuellement avec un ou plusieurs monomères oléfiniques linéaires, en présence d'un catalyseur selon la revendication 1.
